# EUROPÄISCHE PATENTSCHRIFT

(11) **EP 3 224 189 B1**
(45) Veröffentlichungstag und Bekanntmachung des Hinweises auf die Patenterteilung: **26.09.2018**
(21) Anmeldenummer: 15794098.2
(22) Anmeldetag: 27.10.2015
(51) Int. Cl.: B66B 23/04

(54) **HANDLAUFANTRIEB FÜR EINE FAHRTREPPE ODER EINEN FAHRSTEIG**
HANDRAIL DRIVE FOR AN ESCALATOR OR MOVING WALKWAY
ENTRAÎNEMENT DE MAIN COURANTE POUR UN ESCALIER OU UN TROTTOIR ROULANT

(30) Priorität: 28.11.2014 EP 14195353
(43) Veröffentlichungstag der Anmeldung: 04.10.2017
(73) Patentinhaber: Inventio AG, 6052 Hergiswil (CH)
(72) Erfinder: WAGENLEITNER, Georg, A-1020 Wien (AT)
(86) Internationale Anmeldenummer: PCT/EP2015/074827
(87) Internationale Veröffentlichungsnummer: WO 2016/083049

(56) Entgegenhaltungen:
- JP-A- H10 175 790
- US-A- 5 307 920
- US-A- 5 638 937
- US-A1- 2008 296 125

## Beschreibung

Die Erfindung betrifft eine Personentransporteinrichtung, die als Fahrtreppe oder Fahrsteig ausgestaltet ist und einen Handlaufantrieb für solch eine Personentransporteinrichtung.

Aus der US 5,307,920A ist ein Handlaufantrieb für eine Fahrtreppe bekannt. Der bekannte Handlaufantrieb weist eine Antriebseinrichtung und eine Gegendruckeinrichtung auf. Zwischen der Antriebseinrichtung und der Gegendruckeinrichtung ist ein Handlauf geführt, wobei der Oberseite des Handlaufes Gegendruckrollen der Gegendruckeinrichtung zugewandt sind. Als Oberseite wird diejenige Seite des Handlaufes bezeichnet, auf welche die Benutzer der Personentransporteinrichtung ihre Hand legen um sich am Handlauf festzuhalten. Zudem weist die Antriebseinrichtung Stützrollen auf, die einem Teil der Gegendruckrollen zugeordnet sind, wobei zwischen den Stützrollen der Antriebseinrichtung und dem Handlauf ein Antriebsriemen läuft. Der Antriebsriemen ist außerdem um ein Antriebsrad und ein Spannrad geführt, um den Antriebsriemen zu spannen. Im Betrieb drücken die Gegendruckrollen den Handlauf gegen den angetriebenen Antriebsriemen, wobei der Antriebsriemen von den Stützrollen der Antriebseinrichtung gestützt wird. Die Anpresskraft, mit der die Gegendruckrollen auf den Handlauf einwirken, wird von einer Feder der Gegendruckeinrichtung aufgebracht.

Der aus der US 5,307,920A bekannte Handlaufantrieb hat den Nachteil, dass sich eine große Bauhöhe ergibt, denn die Gegendruckrollen sind zunächst in einer weiter von der Oberseite des Handlaufes entfernt angeordneten Pendelanordnung gelagert. Diese Pendelanordnung wird von der Feder der Gegendruckeinrichtung beaufschlagt, die noch weiter von der Oberseite des Handlaufes entfernt ist. Da solche Handlaufantriebe üblicherweise im Balustradensockel angeordnet sind, müssen sie wegen ihrer Bauhöhe seitlich des Stufenbandes angeordnet werden. Dies führt zwangsläufig zu einer breiteren Fahrtreppenkonstruktion. Die Betreiber einer Fahrtreppe oder eines Fahrsteiges wünschen aber bei einer vorgegebenen Einbaubreite aufgrund der Gebäudedimensionen ein möglichst breites Stufenband oder Palettenband, um eine möglichst hohe Förderleistung der Personentransporteinrichtung zu erreichen und den Fahrkomfort für die Benutzer zu erhöhen. Ferner kann der seitlich des Stufenbandes angeordnete Handlaufantrieb bauseitig auch zu tieferen Gruben führen, damit der Handlaufantrieb, insbesondere die Feder des Handlaufantriebes, ausreichend Platz hat.

Aus der US 2008/0296125 A1 ist ein weiterer Handlaufantrieb für eine Fahrtreppe bekannt. Dieser Handlaufantrieb weist ebenfalls eine Antriebseinrichtung und eine Gegendruckeinrichtung auf. Die Gegendruckeinrichtung beinhaltet eine Spannvorrichtung und eine Reihe von Gegendruckrollen, wobei in betriebsbereitem Zustand der Handlauf zwischen der Antriebseinrichtung und der Gegendruckeinrichtung angeordnet, und somit zwischen der Antriebseinrichtung und der Gegendruckeinrichtung führbar ist. Der Handlauf wird in betriebsbereitem Zustand von der Reihe von Gegendruckrollen gegen die Antriebseinrichtung mit einer von der Vorspannkraft der Spannvorrichtung verursachten Anpresskraft beaufschlagt. Um eine möglichst geringe Bauhöhe des Handlaufantriebs zu erreichen, ist zwischen den Gegendruckrollen und der Spannvorrichtung mindestens ein flexibles Zugmittel angeordnet, mittels welchem flexiblen Zugmittel die Gegendruckrollen in Position gehalten und die Vorspannkraft der Spannvorrichtung auf die Gegendruckrollen übertragen werden kann. Dazu ist das flexible Zugmittel beziehungsweise Seil mäanderförmig zwischen Umlenkrollen und den Achsen der Gegendruckrollen geschlungen. Durch die Übertragung der Spannkraft mittels eines Seiles wird jede Gegendruckrolle mit derselben Kraft gegen den Handlauf und somit gegen die Antriebsvorrichtung gepresst. Durch die eng beieinanderliegenden Umlenkrollen und deren nahe Anordnung zu den Achsen der Gegendruckrollen sind keine Führungen vorgesehen, welche die Achsen der Gegendruckrollen im Rahmen der Gegendruckeinrichtung führen. Es hat sich herausgestellt, dass das Schlupfverhalten solcher Linear- Handlaufantriebe nicht proportional zur Anzahl ihrer vorhandenen Gegendruckrollen abnimmt. Ferner unterliegen Handläufe, die durch Linear-Handlaufantriebe angetrieben werden üblicherweise einem höheren Verschleiß als solche, die einem Antriebsrad bogenförmig anliegen, wie dies beispielsweise in der US 5,638,937A offenbart ist.

Aufgabe der Erfindung ist es, einen Handlaufantrieb zum Antreiben eines linear durchgeführten Handlaufes einer Personentransporteinrichtung anzugeben, der ein verbessertes Schlupfverhalten aufweist und den Handlauf schont.

Diese Aufgabe wird gelöst durch einen Handlaufantrieb mit zumindest einer Antriebseinrichtung und zumindest einer Gegendruckeinrichtung. Die Gegendruckeinrichtung beinhaltet mindestens zwei Gegendruckrollen, wobei der Handlauf einer Personentransporteinrichtung zwischen der Antriebseinrichtung und der Gegendruckeinrichtung führbar ist. Der Handlauf wird von den mindestens zwei Gegendruckrollen gegen die Antriebseinrichtung mit einer Anpresskraft beaufschlagt. Jede der Gegendruckrollen weist eine Rollenachse auf, an der sie drehbar gelagert ist. Zudem beinhaltet der Handlaufantrieb mindestens ein flexibles Zugmittel, das der Übertragung der Vorspannkraft einer Spannvorrichtung des Handlaufantriebes auf die Rollenachse dient. Dazu ist das Zugmittel durch zumindest eine teilweise Umschlingung mit der Rollenachse verbunden. Das Übersetzungsverhältnis der am Handlauf wirkenden Anpresskraft der jeweiligen Gegendruckrolle zur Vorspannkraft der Spannvorrichtung ist durch einen zugeordneten komplementären Umschlingungswinkel der Umschlingung des flexiblen Zugmittels vorgebbar. Ferner unterscheiden sich die Umschlingungswinkel an den Rollenachsen von zumindest zwei Gegendruckrollen voneinander.

Dadurch lässt sich ein ideales Anpressprofil der Gegendruckeinrichtung über die gesamte Reihe der nebeneinander angeordneten Gegendruckrollen erzeugen, so dass über die Reihe betrachtet die Anpresskraft von Gegendruckrolle zu Gegendruckrolle unterschiedlich ist. Ein ideales Anpressprofil reduziert signifikant den Schlupf zwischen dem anzutreibenden Handlauf und der Antriebsvorrichtung, da an jeder Anpressstelle genau ausreichend angepresst wird, so dass an dieser Anpressstelle die Haftreibung zwischen Antriebsvorrichtung und Handlauf nicht überwunden wird. Ferner wird der Handlauf nicht durch zu hohe Anpresskräfte ausgewalkt.

Bei der Festlegung der unterschiedlichen Anpresskräfte ist einerseits auf die Laufrichtung des Handlaufs im Handlaufantrieb zu achten. Falls der Handlauf in beiden möglichen Bewegungsrichtungen angetrieben werden soll, eignet sich beispielsweise ein symmetrisches Anpressprofil. Auch die Materialeigenschaften des Handlaufs und der Gegendruckrollen müssen miteinbezogen werden. Eine ideale Auslegung der einzelnen Umschlingungswinkel ist dann erreicht, wenn an jeder Stelle, an der eine Gegendruckrolle den Handlauf gegen die Antriebseinrichtung presst, die Grenze zum Übergang von Haftreibung zu Gleitreibung zwischen Handlauf und Antriebseinrichtung nicht überschritten wird. Selbstverständlich darf als Obergrenze, die zulässige Flächenpressung des schwächsten Materials auch nicht überschritten werden. Die Grenze zum Übergang von Haftreibung zu Gleitreibung an den einzelnen Stellen beziehungsweise Anpressstellen hängt auch von der Elastizität des Handlaufs in Längsrichtung ab. Bei gleichen Anpresskräften an allen Stellen kann durch die Elastizität des Handlaufes eine Überwindung der Haftreibung an einzelnen Anpressstellen entstehen, so dass dort temporär Schlupf entsteht und den Handlauf übermäßigem Verschleiß ausgesetzt wird. Dieser temporäre Schlupf kann abwechslungsweise an mehreren Anpressstellen auftreten und ist nicht zwingen auf eine Anpressstelle beschränkt.

Die Gegendruckeinrichtung weist vorzugsweise Linearführungen auf, die zur linearen Führung der mindestens zwei Gegendruckrollen ausgebildet sind. Durch die Linearführung kann die zugeordnete Gegendruckrolle winklig zur Längserstreckung beziehungsweise Mittellängsachse des Handlaufes linear geführt werden. Maßgebend für die räumliche Lage der Mittellängsachse ist jeweils die Berührungsstelle zwischen der zugeordneten Gegendruckrolle und dem Handlauf. Wenn zum Beispiel der Handlauf im Bereich der Gegendruckrolle umgelenkt wird, dann dient die räumliche Lage der Mittellängsachse an der Berührungsstelle im Sinne einer Tangente als Basis für die winklige Anordnung der Linearführung. Aufgrund dieser Linearführung kann sich die zugeordnete Gegendruckrolle nur in der durch die Linearführung vorgegebenen Richtung bewegen. Dies hat den Vorteil, dass die Berührungsstelle von Handlauf und Gegendruckrolle ungeachtet von Unebenheiten des zwischen der Antriebseinrichtung und der Gegendruckrolle durchlaufenden Handlaufes genau vorgegeben werden kann.

Dadurch eliminiert die vorliegenden Erfindung auch die Hauptnachteile der in der US 5,307,920A und in der US 2008/0296125 A1 offenbarten Handlaufantriebe. Die mit einem Pendellaufwerk gelagerten Gegendruckrollen der US 5,307,920A bewegen sich auf Kreisbahnen und stützen sich gegenseitig am Handlauf ab. Sobald eine Auslenkung des Pendellaufwerkes beispielsweise durch am Handlauf klebender Schmutz erfolgt, beeinflussen die auslenkenden Gegendruckrollen die Anpresskraft der anderen Gegendruckrollen. Dies kann zu einem temporären Verlust der Haftreibung zwischen dem Handlauf und dem Antriebsriemen und dadurch zu unerwünschtem Schlupf führen. Die alleine durch die Zugmittel eng an den Umlenkrollen gehaltenen Achsen der US 2008/0296125 A1 können sich, da eine Linearführung der Achsen fehlt, aufgrund der Nachgiebigkeit des Federelements in engen Grenzen horizontal verschieben, wodurch derselbe Effekt entstehen kann.

Vorzugsweise ist die Linearführung rechtwinklig zur Mittellängsachse des Handlaufes beziehungsweise, wenn der Handlauf den Handlaufantrieb in linearer Richtung durchläuft, zur Längserstreckung des Handlaufes angeordnet. Dies hat den Vorteil, dass die Anpresskraft ausschließlich durch die Vorspannkraft der Spannvorrichtung vorgegeben ist. Sobald die Linearführung nicht rechtwinklig zur Mittellängsachse des Handlaufes angeordnet ist, wird während des Betriebes des Handlaufantriebes durch die Antriebsvorrichtung an der Gegendruckrolle ein Kraftvektor erzeugt, der in Abhängigkeit der Laufrichtung die Anpresskraft der Gegendruckrolle erhöht oder mindert.

Idealerweise sind die Rollenachsen aller Gegendruckrollen mit den vorangehend beschriebenen Linearführungen linear geführt. Vorzugsweise werden die Rollenachsen einer Gegendruckeinrichtung alle von demselben flexiblen Zugmittel teilweise umschlungen, so dass die notwendige Anzahl Zugmittel möglichst tief gehalten werden kann.

Vorzugsweise überragt die Rollenachse die Gegendruckrolle beidseitig mit ihren beiden Enden. Dies schafft die Möglichkeit, dass in montiertem Zustand jedes der beiden Enden der Rollenachse auf einfache Weise mit mindestens einem flexiblen Zugmittel verbunden werden kann, um die Vorspannkraft vorzugsweise symmetrisch auf beide Enden der Rollenachse zu übertragen.

Selbstverständlich kann die Gegendruckrolle einer Rollenachse auch in zwei schmale Gegendruckrollen unterteilt sein, so dass das mindestens eine flexible Zugmittel zwischen den beiden schmalen Gegendruckrollen angeordnet, mit der Rollenachse verbunden werden kann.

Ferner bietet diese Ausgestaltung die Möglichkeit, dass jedes der beiden Enden der Rollenachse mittels einer zugeordneten Linearführung der Gegendruckeinrichtung geführt ist. Die Linearführungen können so ausgebildet sein, dass sie die zugeordnete Rollenachse nur in einer Ebene linear führen. Dadurch sind beispielsweise pendelnde Ausgleichsbewegungen der Gegendruckrolle quer zur Durchlaufrichtung beziehungsweise Bewegungsrichtung des Handlaufes möglich.

Damit die Spannvorrichtung an einer geeigneten, das heißt insbesondere eine minimale Bauhöhe der Gegendruckeinrichtung ermöglichenden Stelle angeordnet werden kann, weist die Gegendruckeinrichtung vorzugsweise mindestens eine Umlenkeinrichtung zur Umlenkung des mindestens einen flexiblen Zugmittels auf. Selbstverständlich kann die Gegendruckvorrichtung auch mehrere Umlenkeinrichtungen aufweisen, welche das flexible an mehreren Stellen der Gegendruckeinrichtung umlenken. Die Umlenkeinrichtungen können beispielsweise Umlenkrollen mit Wälzlager oder Gleitlager aufweisen. Dadurch wird bei mehreren Umlenkungen die durch das Zugmittel übertragene Vorspannkraft je Umlenkung nur geringfügig reduziert. Selbstverständlich kann die Gegendruckeinrichtung auch mehrere flexible Zugmittel aufweisen, welche mittels mehrerer Umlenkeinrichtungen umgelenkt werden.

Um die Bauhöhe des Handlaufantriebes möglichst gering zu halten, wird der Handlauf vorzugsweise zwischen der Antriebseinrichtung und der Gegendruckeinrichtung in einer Durchlaufzone in linearer Laufrichtung geführt. Selbstverständlich können die Antriebseinrichtung und die Gegendruckeinrichtung auch derart ausgestaltet sein, dass der Handlauf zwischen der Antriebseinrichtung und der Gegendruckeinrichtung in einer bogenförmigen Laufrichtung geführt ist und damit in der Durchlaufzone umgelenkt wird.

Zur Befestigung der Spannvorrichtung kann die Gegendruckeinrichtung mindestens eine Federaufnahme aufweisen. Die Spannvorrichtung kann als Spannelement beispielsweise eine Schraubendruckfeder, ein Tellerfederpaket, eine Gasdruckfeder, ein Block elastischen Materials wie beispielsweise Gummi und dergleichen mehr aufweisen. Durch die Federaufnahme ist die Spannvorrichtung beziehungsweise die Mittellängsachse des Spannelementes in einem vorgegebenen Winkel zur linearen Laufrichtung des Handlaufes anordenbar. Beispielsweise kann die Mittellängsachse des Spannelementes parallel zur Mittellängsachse des Handlaufes angeordnet sein.

Des Weiteren kann die Gegendruckeinrichtung einen Führungsrahmen aufweisen, der starr mit einem Gehäuse der Antriebseinrichtung verbunden ist. Vorzugsweise sind die Linearführungen, die mindestens eine Umlenkeinrichtung und die mindestens eine Federaufnahme an diesem Führungsrahmen ausgebildet beziehungsweise angeordnet.

Die Antriebseinrichtung des vorliegenden Handlaufantriebes weist zumindest ein Antriebsrad, zumindest ein Spannrad, zumindest einen Antriebsriemen und eine oder mehrere Stützrollen auf. Der Antriebsriemen ist mittels des Antriebsrades und des von diesem beabstandet angeordneten Spannrades umlaufend angeordnet. Die Stützrollen sind zwischen dem Antriebsrad und dem Spannrad angeordnet und stützen mindestens eine Seite beziehungsweise mindestens ein Trum des Antriebsriemens ab. Der Antriebsriemen wird vom Antriebsrad angetrieben. Der Antriebsriemen kann ein Zahnriemen, ein Flachriemen, ein Keilrippenriemen, ein Keilriemen und dergleichen mehr sein. Das Antriebsrad, das Spannrad und die Stützrollen sind dem Antriebsriemen angepasst ausgestaltet.

Da sich die vorangehend beschriebene Antriebsvorrichtung über eine gewisse Länge des Handlaufes erstreckt, kann auch die Gegendruckeinrichtung in vergleichbarer Länge ausgestaltet sein. Um über die Länge der Antriebsvorrichtung einen ausreichenden Gegendruck beziehungsweise ein über die Länge der Gegendruckeinrichtung sich erstreckendes Anpressprofil zu erzeugen, weist die Gegendruckeinrichtung wie weiter oben erwähnt, mehrere Gegendruckrollen auf. Vorzugsweise sind die Gegendruckrollen der Gegendruckeinrichtung sowie das Antriebsrad, das Spannrad und die Stützrollen der Antriebseinrichtung einander jeweils paarweise zugeordnet.

Ein besonders einfacher Aufbau der Gegendruckeinrichtung lässt sich erzielen, wenn das mindestens eine flexible Zugmittel mäanderförmig zwischen den Gegendruckrollen beziehungsweise deren Rollenachsen und mehreren Umlenkeinrichtungen angeordnet ist. Je nach Ausgestaltung der Gegendruckrollen, der Umlenkeinrichtungen und gegebenenfalls der Spannvorrichtung ist nur ein einziges flexibles Zugmittel erforderlich. Selbstverständlich können auch zwei oder mehr flexible Zugmittel verwendet werden. Beispielsweise kann eines der flexiblen Zugmittel zwischen allen linken Enden der Rollenachsen und den zugeordneten Umlenkeinrichtungen, und das andere flexible Zugmittel zwischen allen rechten Enden der Rollenachsen und den zugeordneten Umlenkeinrichtungen mäanderförmig angeordnet sein. Des Weiteren können die Gegendruckrollen auch in Gruppen aufgeteilt sein, wobei die einzelnen Gruppen durch jeweils ein oder zwei flexible Zugmittel beaufschlagt werden.

Das mindestens eine flexible Zugmittel kann ein Stahlseil, ein Glasfaserseil, ein Karbonfaserseil, ein Aramidfaserseil, ein Textilfaserseil mit geringer Dehnung, ein Riemen oder eine Kette sein. Vorzugsweise weist das flexible Zugmittel unter Vorspannung eine möglichst geringe Dehnung über die Zeit auf, so dass während des Betriebes ein möglichst geringer Vorspannkraftverlust entsteht. Durch diese Ausgestaltung lässt sich für jede Gegendruckrolle eine recht genau vordefinierte Anpresskraft einstellen.

Es ist aber auch möglich, dass das flexible Zugmittel elastisch ausgebildet ist, so dass die Spannvorrichtung nur Mittel zum Einstellen der Vorspannkraft aufweist und kein eigenes Federelement. Beim Einsatz eines elastischen flexiblen Zugmittels ist aber darauf zu achten, dass dessen Setzverhalten möglichst gering ist, um den Vorspannkraftverlust möglichst gering zu halten.

Selbstverständlich kann der Handlaufantrieb eine Überwachungsvorrichtung zur Überwachung der Vorspannkraft aufweisen. Diese Überwachungsvorrichtung kann beispielsweise ein Taster sein, der im Bereich der Spannvorrichtung angeordnet ist und die Stellung des weiter oben beschriebenen Spannelementes überwacht.

Eingesetzt wird der erfindungsgemäße Handlaufantrieb vorzugsweise in Personentransporteinrichtungen, die als Fahrtreppe oder Fahrsteig ausgestaltet sind und zumindest einen bewegbaren Handlauf aufweisen.

Die Personentransporteinrichtung kann pro anzutreibenden Handlauf selbstverständlich auch mehrere Handlaufantriebe aufweisen. Selbstverständlich können auch bestehende Personentransporteinrichtungen modernisiert werden, indem deren mindestens ein bestehender Handlaufantrieb durch mindestens einen erfindungsgemäßen Handlaufantrieb mit mindestens einem flexiblen Zugelement ersetzt wird. Gegebenenfalls sind dadurch an der bestehenden Personentransporteinrichtung weitere Änderungen notwendig, beispielsweise am Tragwerk beziehungsweise Fachwerk, an Führungen des Handlaufes, an elektrischen Anlagen und dergleichen mehr.

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigen:
- Figur 1:: in schematischer Darstellung eine Fahrtreppe mit einem Tragwerk beziehungsweise Fachwerk und zwei Umlenkbereichen, wobei am Tragwerk Balustraden mit einem umlaufenden Handlauf angeordnet sind, der durch einen Handlaufantrieb antreibbar ist;
- Figur 2:: in schematischer Darstellung einen Fahrsteig mit einem Tragwerk und zwei Umlenkbereichen, wobei am Tragwerk Balustraden mit einem umlaufenden Handlauf angeordnet sind, der durch einen Handlaufantrieb antreibbar ist;
- Figur 3:: der in den Figuren 1 und 2 dargestellte Handlaufantrieb und einen Abschnitt des Handlaufes in dreidimensionaler Darstellung;
- Figur 4:: eine Darstellung des in der Figur 3 angegebenen Querschnitts X-X des Handlaufantrieb es;
- Figur 5:: eine Darstellung des in der Figur 4 angegebenen Längsschnitts Y-Y des Handlaufantriebes und
- Figur 6:: ein Anpressprofil beziehungsweise die auf den Handlauf wirkenden Andruckkräfte der einzelnen Gegendruckrollen des in der Figur 5 dargestellten Handlaufantriebes.

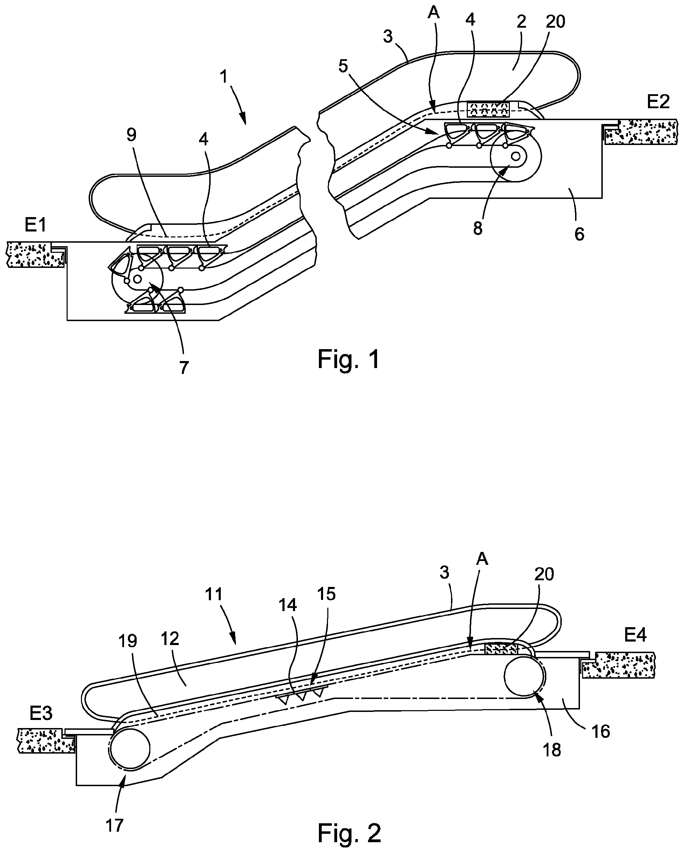

Figur 1 zeigt schematisch in der Seitenansicht eine Personentransporteinrichtung 1, die als Fahrtreppe 1 ausgestaltet ist und die eine erste Etage E1 mit einer zweiten Etage E2 verbindet. Die Fahrtreppe 1 weist ein Tragwerk 6 beziehungsweise ein Fachwerk 6 mit zwei Umlenkbereichen 7, 8 auf, zwischen denen ein Stufenband 5 mit einer Mehrzahl Stufen 4 umlaufend geführt ist. Ein Handlauf 3 ist an einer Balustrade 2 umlaufend angeordnet. Die Balustrade 2 ist am unteren Ende mittels eines Balustradensockels 9 mit dem Tragwerk 6 beziehungsweise Fachwerk 6 verbunden. Der Vorlauf des Handlaufes 3 verläuft entlang der Oberkante der Balustrade 2 und der Rücklauf des Handlaufes 3 erfolgt im Innern des Balustradensockels 9. Um den umlaufenden Handlauf 3 anzutreiben, ist im Innern des Balustradensockels 9 ein Handlaufantrieb 20 angeordnet.

Der Handlaufantrieb 20 ist aufgrund seiner geringen Bauhöhe an einem Obergurt des Tragwerks 6 fixiert. Üblicherweise weist eine Fahrtreppe 1 zwei Balustraden 9 mit je einem Handlauf 3 auf, wobei das Stufenband 5 zwischen den beiden Balustraden 2 angeordnet ist. Dem entsprechend sind üblicherweise auch zwei Handlaufantriebe 20 erforderlich, um die beiden umlaufenden Handläufe 3 anzutreiben.

In analoger Weise aufgebaut, zeigt Figur 2 schematisch in der Seitenansicht eine als Fahrsteig 11 ausgestaltete Personentransporteinrichtung 11, welche ebenfalls eine Balustrade 12 mit Balustradensockel 19, einen Handlauf 3, ein Tragwerk 16, sowie zwei Umlenkbereiche 17, 18 aufweist. Im Unterschied zur Fahrtreppe 1 aus der Figur 1, ist zwischen den Umlenkbereichen 17, 18 des Fahrsteiges 11 kein Stufenband, sondern ein Palettenband 15 mit einer Mehrzahl Paletten 14 umlaufend angeordnet. Der Fahrsteig 11 verbindet beispielsweise eine dritte Etage E3 mit einer vierten Etage E4. Der Handlauf 3 und der Handlaufantrieb 20 des Fahrsteiges 11 entsprechen dem Handlauf 3 und dem Handlaufantrieb 20 der Fahrtreppe 10 der Figur 1, weshalb dieselben Bezugszeichen verwendet werden. Auch bei einem Fahrsteig 11 werden üblicherweise zwei Balustraden 12 mit Handläufen 3 verwendet, die sich zu beiden Seiten des Palettenbandes 15 erstrecken.

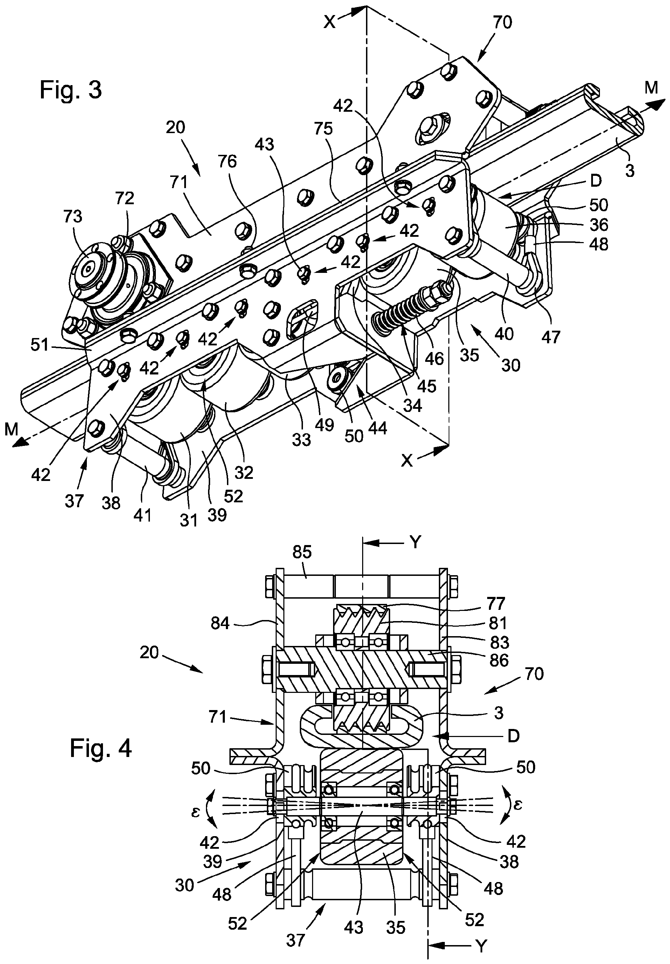

Wie die beiden Figuren 1 und 2 zeigen, sind die Handlaufantriebe 20 in einem Abschnitt der Fahrtreppe 1 oder des Fahrsteiges 11 verbaut, in denen der anzutreibende Handlauf 3 in linearer Richtung im Balustradensockel 9, 19 geführt ist. Selbstverständlich kann ein Handlaufantrieb 20 auch in einem Bereich angeordnet werden, in dem der Handlauf 3 umgelenkt wird, wie dies beispielsweise in dem mit A bezeichneten Bereich erfolgt. Dann müsste aber die Durchlaufzone D (siehe Figuren 3 bis 5) des Handlaufantriebs 20, welche der Handlauf 3 durchläuft, ebenfalls bogenförmig ausgestaltet sein. Eine solche Ausgestaltung des Handlaufantriebes 20 ist jedoch problemlos realisierbar, wie aus den nachfolgend gemeinsam beschriebenen Figuren 3 bis 5 deutlich erkennbar ist.

Die Figur 3 zeigt den Handlaufantrieb 20 aus den Figuren 1 und 2 sowie einen Teil des Handlaufes 3 in dreidimensionaler Darstellung. Der Handlaufantrieb 20 ist in seiner vorgesehenen Einbaulage in der Personentransportanlage 1, 11 dargestellt, wobei die Blickrichtung von schräg unten gewählt ist, um möglichst viele Teile der Gegendruckeinrichtung 30 des Handlaufantriebes 20 zu zeigen.

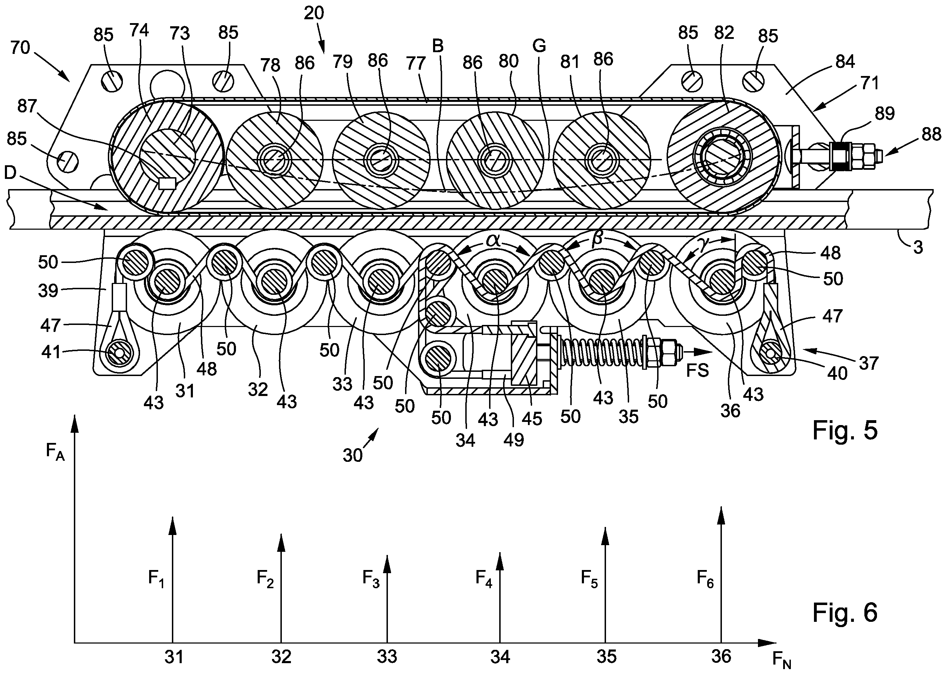

Die Figur 4 zeigt den in der Figur 3 im Bereich der Gegendruckrolle 35 angegebenen Querschnitt X-X des Handlaufantriebs 20. Figur 5 zeigt den in der Figur 4 angegebenen Längsschnitt Y-Y des Handlaufantriebs 20.

Der Handlaufantrieb 20 kann unabhängig von den sonstigen Komponenten der Personentransporteinrichtung 1, 11 hergestellt und vertrieben werden. Die Gegendruckeinrichtung 30 weist eine Mehrzahl Gegendruckrollen 31 bis 36 auf. Jede der Gegendruckrollen 31 bis 36 weist eine Rollenachse 43 (nur eine mit Bezugszeichen versehen) auf. Die Rollenachsen 43 der Gegendruckrollen 31 bis 36 sind alle in einer zur Mittellängsachse M-M des Handlaufes 3 parallelen Ebene, nebeneinander in einem Führungsrahmen 37 der Gegendruckeinrichtung 30 angeordnet.

Der Führungsrahmen 37 weist zwei spiegelsymmetrisch zur Mittellängsachse M-M des Handlaufes 3 ausgebildete Wangen 38, 39 auf, welche mittels zwei Distanzbolzen 40, 41 miteinander verbunden sind. In den beiden Wangen 38, 39 sind als Langlöcher ausgebildete Linearführungen 42 vorhanden, wobei aufgrund der perspektivischen Darstellung nur die Linearführungen 42 einer der beiden Wangen 38, 39 zu sehen sind.

Die Enden jeder Rollenachse 43 reichen durch zwei einander gegenüberliegende Linearführungen 42 beziehungsweise Langlöcher 42 des Führungsrahmens 37 hindurch, so dass die Gegendruckrollen 31 bis 36 mittels der Linearführungen 42 linear geführt sind. Die Linearführungen 42 beziehungsweise Langlöcher 42 erstrecken sich im dargestellten Ausführungsbeispiel in ihrer größten Ausdehnung rechtwinklig zur Mittellängsachse M-M.

Die Mittellängsachse M-M bezeichnet auch die Längserstreckung und die lineare Laufrichtung des Handlaufes 3 in der Durchlaufzone D beziehungsweise Förderzone D des Handlaufantriebes 20. Es ist jedoch auch möglich, eine vom rechten Winkel abweichende, winklige Anordnung der Linearführungen 42 zur Mittellängsachse M-M des Handlaufes 3 zu wählen. Logischerweise darf die Linearführung 42 nicht parallel zur Mittellängsachse M-M angeordnet sein.

Am Führungsrahmen 37 der Gegendruckeinrichtung 30 ist zudem eine Federaufnahme 44 ausgebildet, durch welche Federaufnahme 44 eine Spannvorrichtung 45 in einem vorgegebenen Winkel zur linearen Laufrichtung beziehungsweise zur Mittellängsachse M-M des Handlaufes 3 anordenbar ist. Die Spannvorrichtung 45 weist im vorliegenden Ausführungsbeispiel als Spannelement 46 eine Schraubendruckfeder auf. Selbstverständlich können als Spannelement 46 auch eine Gasdruckfeder, ein Tellerfederpaket, ein Block elastisches Material wie beispielsweise Gummi und dergleichen mehr verwendet werden. Im vorliegenden Ausführungsbeispiel ist die Spannvorrichtung 45 beziehungsweise die Mittellängsachse von dessen Spannelement 46, parallel zur Laufrichtung des Handlaufes 3 angeordnet.

Zudem ist erkennbar, dass an den Distanzbolzen 40, 41 erste Enden 47 flexibler Zugmittel 48 befestigt sind. Deren zweite Enden 49 sind mit der Spannvorrichtung 45 verbunden. Die flexiblen Zugmittel 48 sind hauptsächlich zwischen den Wangen 38, 39 und den Stirnflächen 52 der Gegendruckrollen 31 bis 36 angeordnet und umschlingen teilweise die Rollenachsen 43 der Gegendruckrollen 31 bis 36 sowie an den Wangen 38, 39 befestigte Umlenkeinrichtungen 50. Die Anordnung der flexiblen Zugmittel 48 wird weiter unten in Zusammenhang mit den Figuren 4 und 5 ausführlicher beschrieben.

Selbstverständlich sind weitere Möglichkeiten denkbar, das flexible Zugmittel 48 in der Gegendruckeinrichtung 30 anzuordnen. Beispielsweise können die Gegendruckrollen 31 bis 36 jeweils in zwei schmale Gegendruckrollen unterteilt, auf ihren zugeordneten Rollenachsen 43 voneinander beabstandet angeordnet sein. Durch den so geschaffenen Zwischenraum der die Mitte der Rollenachse 43 zugänglich macht, kann das flexible Zugmittel 48 zwischen den beiden schmalen Gegendruckrollen angeordnet, mit der Rollenachse 43 verbunden werden.

Der Handlaufantrieb 20 weist ferner eine Antriebseinheit 70 auf, von welcher im Wesentlichen das Gehäuse 71 und eine Antriebsriemenscheibe 72 erkennbar ist. Die Antriebsriemenscheibe 72 kann mit einem nicht dargestellten Motor verbunden werden. Das vom Motor an die Antriebsriemenscheibe 72 übertragene Antriebsdrehmoment wird mittels einer Welle 73 auf ein in der Figur 5 dargestelltes Antriebsrad 74 übertragen.

Sowohl am Gehäuse 71 der Antriebseinheit 70 als auch am Führungsrahmen 37 der Gegendruckeinrichtung 30 sind Verbindungslaschen 51, 75 ausgebildet, durch welche die Antriebseinheit 70 mit der Gegendruckeinrichtung 30 mittels weniger Schrauben 76 verbunden werden kann. Dies erleichtert den Austausch des Handlaufes 3 bei Servicearbeiten enorm, da die Gegendruckeinrichtung 30 problemlos von der Antriebseinheit 70 getrennt, der alte Handlauf 3 aus der Durchlaufzone D entfernt, der neue Handlauf 3 in die Durchlaufzone D eingefügt und die Gegendruckeinrichtung 30 wieder an der Antriebseinheit 70 festgeschraubt werden kann. An Stelle der Schrauben 76 können selbstverständlich auch andere Befestigungsmittel verwendet werden.

Der in Figur 4 dargestellte Querschnitt X-X der Gegendruckeinrichtung zeigt einen weiteren, herausragenden Vorteil des vorliegenden Handlaufantriebs 20. Da die beiden Enden der Rollenachsen 43 der Gegendruckrollen 31 bis 36 beidseitig mittels Linearführungen 42 im Führungsrahmen 37 linear geführt sind, können diese dank geringen Spiels in den Linearführungen 42 quer zur Mittellängsachse M-M (siehe Figur 3) pendeln beziehungswese schwenken, wie dies in der Figur 4 durch die Winkelangabe ε-ε verdeutlicht ist. Dadurch folgen die Gegendruckrollen 31 bis 36 jeder Unebenheit beziehungsweise jedem Dickenunterschied des Handlaufes 3 nach, wodurch dieser nicht gewalkt wird und am Handlauf 3 anhaftender Schmutz weniger eingewalzt wird. Dies führt dazu, dass sich der Handlauf 3 leichter reinigen lässt und dessen Lebensdauer erhöht wird.

Im Querschnitt X-X der Gegendruckeinrichtung 30 ist auch die Anordnung der flexiblen Zugmittel 48 zwischen den Wangen 38, 39 und den Stirnflächen 52 der Gegendruckrollen 31 bis 36 erkennbar. Die an den Wangen 38, 39 angeordneten Umlenkeinrichtungen 50 ragen nur soweit in diesen Zwischenraum hinein, dass sie nicht an den Stirnflächen 52 der Gegendruckrollen 31 bis 36 streifen.

In den Figuren 4 und 5 sind zudem weitere Teile der Antriebseinheit 70 erkennbar. Im Gehäuse 71 sind, wie in der Figur 5 dargestellt, ein Antriebsrad 74 und ein Spannrad 82 angeordnet, an denen ein Antriebsriemen 77 umlaufend angeordnet ist. Das Antriebsrad 74 ist mittels der Welle 73 drehgelagert, wobei mittels eines Keils 87 das Drehmoment der Welle 73 formschlüssig auf das Antriebsrad 74 übertragen wird. Das Spannrad 82 ist mit einer Riemenspannvorrichtung 88 verbunden, welche im vorliegenden Ausführungsbeispiel ein Tellerfederpaket als Spannelement 89 aufweist. Selbstverständlich können bei der Riemenspannvorrichtung 88 auch andere Spannelemente 89 wie Schraubendruckfedern, Zugfedern, Gasdruckfedern und dergleichen mehr verwendet werden.

Ferner sind mehrere Stützrollen 78 bis 81 im Gehäuse 71 angeordnet, die den Antriebsriemen 77 abstützen. In der Figur 4 ist aufgrund der Schnittebene X-X nur eine Stützrolle 81 dargestellt. Als Antriebsriemen 77 wird im vorliegenden Ausführungsbeispiel ein Keilrippenriemen 77 beziehungsweise Poly-V-Riemen 77 verwendet.

Zudem ist der einfache und stabile Aufbau des Gehäuses 71 der Antriebseinheit 70 mittels zwei Gehäusewangen 83, 84 und Distanzbolzen 85 erkennbar. Das Gehäuse 71 wird durch die montierten Stützrollenachsen 86 der Stützrollen 78 bis 81 zusätzlich versteift, da diese Stützrollenachsen 86 fest mit den Gehäusewangen 83, 84 verbunden sind. Die Stützrollen 78 bis 81 stützen den Antriebsriemen 77 und den in der Durchlaufzone D befindlichen Teil des Handlaufes 3 gegen die in der Figur 6 dargestellten Andruckkräfte F₁ bis F₆ der Gegendruckrollen 31 bis 36 ab. Figur 6 wird weiter unten ausführlicher beschrieben.

Das vorliegende, in den Figuren 3 bis 5 dargestellte Ausführungsbeispiel des Handlaufantriebes 20 weist eine gerade Durchlaufzone D auf, das heißt, dass der Handlauf 3 in dieser Durchlaufzone D nicht umgelenkt wird. Wie bereits weiter oben erwähnt, muss die Durchlaufzone D aber nicht zwingend gerade sein. Eine bogenförmige Durchlaufzone D und damit eine Umlenkung des Handlaufes 3 ist ganz einfach dadurch erreichbar, dass die Drehachsen 86 der Stützrollen 78 bis 81 zwischen dem Antriebsrad 74 und dem Spannrad 82 nicht auf einer geraden Linie G beziehungsweise Ebene, sondern auf einer bogenförmigen Linie B im Gehäuse 71 der Antriebseinheit 70 angeordnet sind. Gegebenenfalls muss auch die örtliche Lage der einzelnen Linearführungen 42 der Gegendruckrollen 31 bis 36 entsprechend angepasst werden.

Wie bereits in Zusammenhang mit Figur 3 beschrieben, sind an den Distanzbolzen 40, 41 erste Enden 47 flexibler Zugmittel 48 befestigt sind. Deren zweite Enden 49 sind mit der Spannvorrichtung 45 verbunden. Im vorliegenden Ausführungsbeispiel sind insgesamt vier flexible Zugmittel 48 (in der Figur 5 nur zwei erkennbar) vorhanden, wobei jeweils zwei flexible Zugmittel 48 einer ersten Gruppe von Gegendruckrollen 31 bis 33 und einer zweiten Gruppe von Gegendruckrollen 34 bis 36 zugeordnet sind. Durch die vier flexiblen Zugmittel 48 wird die Vorspannkraft F_{S} der Spannvorrichtung 45 auf die Gegendruckrollen 31 bis 36 übertragen. Selbstverständlich kann bei entsprechender Ausgestaltung die Vorspannkraft F_{S} auch mittels eines einzigen flexiblen Zugmittels 48 auf alle Gegendruckrollen 31 bis 36 übertragen werden. Es ist auch möglich, dass jeder Gegendruckrolle 31 bis 36 ein oder zwei flexible Zugmittel 48 zugeordnet sind.

Die flexiblen Zugmittel 48 sind mäanderförmig zwischen der ersten Gruppe von Gegendruckrollen 31 bis 33 beziehungsweise deren Rollenachsen 43, und der zweiten Gruppe von Gegendruckrollen 34 bis 36 beziehungsweise deren Rollenachsen 43 sowie mehreren Umlenkeinrichtungen 50 angeordnet. Dabei umschlingen die flexiblen Zugmittel 48 teilweise die Rollenachsen 43 der Gegendruckrollen 31 bis 36 und die Umlenkeinrichtungen 50. Je nach Positionierung der Umlenkeinrichtungen an den Wangen 38, 39 des Führungsrahmens 37, können für die einzelnen Rollenachsen 43 unterschiedliche komplementäre Umschlingungswinkel α, β, γ geschaffen werden. Als komplementärer Umschlingungswinkel α, β, γ wird der Winkel zwischen den beiden Zugmittelabschnitten des flexiblen Zugmittels 48 bezeichnet, die von der umschlungenen Rollenachse 43 wegführen. Wie aus der Figur 5 deutlich entnommen werden kann, unterscheiden sich die drei bezeichneten komplementären Umschlingungswinkel α, β, γ der Gegendruckrollen 34 bis 36 voneinander. Mittels dieser komplementären Umschlingungswinkel α, β, γ kann für jede der Gegendruckrollen 34 bis 36 ein Übersetzungsverhältnis festgelegt werden, mittels dem die Vorspannkraft F_{S} in eine, von der zugeordneten Gegendruckrolle 34 bis 36 auf den Handlauf 3 wirkende Anpresskraft F_{A} übersetzt wird.

Um dies noch deutlicher darzustellen, zeigt Figur 6 ein Anpressprofil, in dessen Abszisse F_{N} die Bezugszeichen der der einzelnen Gegendruckrollen 31 bis 36 aufgeführt sind. In dessen Ordinate sind schematisch die auf den Handlauf 3 wirkenden Andruckkräfte F_{A} der einzelnen Gegendruckrollen 34 bis 36 des in der Figur 5 dargestellten Handlaufantriebes 20 eingetragen. Um die Andruckkräfte F_{A} den einzelnen Gegendruckrollen 31 bis 36 zuordnen zu können, sind sie in der Figur 6 als spezifische Andruckkräfte F₁ bis F₆ bezeichnet.

Im dargestellten Ausführungsbeispiel der Figuren 3 bis 6 ergibt der größte komplementäre Umschlingungswinkel α der Gegendruckrolle 34 das kleinste Übersetzungsverhältnis, um die Vorspannkraft F_{S} in die Anpresskraft F₄ zu übersetzen. Entsprechend ergibt der kleinste komplementäre Umschlingungswinkel γ der Gegendruckrolle 36 das größte Übersetzungsverhältnis, um die Vorspannkraft F_{S} in die Anpresskraft F₆ zu übersetzen. Dadurch lässt sich ein ideales Anpressprofil der Gegendruckeinrichtung 30 über die gesamte Reihe der nebeneinander angeordneten Gegendruckrollen 31 bis 36 festlegen beziehungsweise erzeugen, so dass beispielsweise die Anpresskraft F_{A} zur Mitte der Reihe hin von Gegendruckrolle zu Gegendruckrolle abnimmt. Selbstverständlich kann die Anpresskraft F_{A} zur Mitte der Reihe hin auch zunehmen.

Die in der Figur 6 schematisch dargestellten spezifischen Andruckkräfte F₁ bis F₆ sind selbstverständlich den Reibungskräften in den Umlenkvorrichtungen 50 und den umschlungenen Rollenachsen 43 unterworfen. Diese können aber dank der vorliegenden Erfindung bei der Bemessung der unterschiedlichen Umschlingungswinkel α, β, γ mitberücksichtigt werden.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem anstelle mehrerer flexibler Zugmittel 48 nur ein flexibles Zugmittel 48 verwendet wird, wobei dessen beide Enden am Führungsrahmen 37 befestigt sind und die Mitte dieses flexiblen Zugmittels 48 mit der Spannvorrichtung 45 verbunden ist. Der erfindungsgemäße Handlaufantrieb 20 kann sowohl in einer Fahrtreppe 1, als auch in einem Fahrsteig 11 eingesetzt werden. Zudem können auch mehrere Handlaufantriebe 20 zum Antreiben jedes Handlaufes 3 der Fahrtreppe 1 oder des Fahrsteiges 11 im Balustradensockel 9, 19 angeordnet sein. Sofern die Gegendruckeinrichtung 30 bogenförmig angeordnete Gegendruckrollen 31 bis 36 aufweist, kann sie auch mit einer Antriebseinrichtung kombiniert werden, die ein einzelnes, großes Antriebsrad aufweist, an dessen Umfang der anzutreibende Handlauf 3 umgelenkt wird.

## Patentansprüche

1. Handlaufantrieb (20) mit zumindest einer Antriebseinrichtung (70) und zumindest einer Gegendruckeinrichtung (30), welche Gegendruckeinrichtung (30) mindestens zwei Gegendruckrollen (31 bis 36) beinhaltet, wobei ein Handlauf (3) einer Personentransporteinrichtung (1, 11) zwischen der Antriebseinrichtung (70) und der Gegendruckeinrichtung (30) führbar ist und der Handlauf (3) von den zumindest zwei Gegendruckrollen (31 bis 36) gegen die Antriebseinrichtung (70) mit einer Anpresskraft (F_{A}) beaufschlagbar ist, wobei jede der Gegendruckrollen (31 bis 36) eine Rollenachse (43) aufweist und der Handlaufantrieb (20) mindestens ein flexibles Zugmittel (48) beinhaltet, das zur Übertragung der Vorspannkraft (F_{S}) einer Spannvorrichtung (45) des Handlaufantriebes (20) auf die Rollenachse (43) durch zumindest eine teilweise Umschlingung mit der Rollenachse (43) verbunden ist, **dadurch gekennzeichnet, dass** das Übersetzungsverhältnis der am Handlauf (3) wirkenden Anpresskraft (F_{A}) der Gegendruckrolle (31 bis 36), zur Vorspannkraft (F_{S}) der Spannvorrichtung (45), durch einen komplementären Umschlingungswinkel (α, β, γ) der Umschlingung des flexiblen Zugmittels (48) vorgebbar ist und die zugeordneten Umschlingungswinkel (α, β, γ) von zumindest zwei Gegendruckrollen sich voneinander unterscheiden.

2. Handlaufantrieb (20) nach Anspruch 1, wobei die Gegendruckeinrichtung (30) Linearführungen (42) aufweist, durch welche Linearführungen (42) die mindestens zwei Gegendruckrollen (31 bis 36) winklig zur Längserstreckung beziehungsweise zur Mittellängsachse (M-M) des Handlaufes (3) geführt sind.

3. Handlaufantrieb (20) nach Anspruch 2, wobei die Linearführungen (42) rechtwinklig zur Längserstreckung beziehungsweise zur Mittellängsachse (M-M) des Handlaufes (3) angeordnet sind.

4. Handlaufantrieb (20) nach einem der Ansprüche 1 bis 3, wobei die Rollenachse (43) die Gegendruckrolle (31 bis 36) beidseitig mit ihren beiden Enden überragt und in montiertem Zustand jedes der beiden Enden der Rollenachse (43) mit mindestens einem flexiblen Zugmittel (48) verbunden ist.

5. Handlaufantrieb (20) nach Anspruch 4, wobei jedes der beiden Enden der Rollenachse (43) mittels einer zugeordneten Linearführung (42) der Gegendruckeinrichtung (30) geführt ist.

6. Handlaufantrieb (20) nach einem der Ansprüche 1 bis 5, wobei die Gegendruckeinrichtung (30) mindestens eine Umlenkeinrichtung (50) zur Umlenkung des mindestens einen flexiblen Zugmittels (48) aufweist.

7. Handlaufantrieb (20) nach einem der Ansprüche 1 bis 6, wobei der Handlauf (3) zwischen der Antriebseinrichtung (70) und der Gegendruckeinrichtung (30) in einer Durchlaufzone (D) in linearer Laufrichtung geführt ist und die Gegendruckeinrichtung (30) mindestens eine Federaufnahme (44) aufweist, durch welche Federaufnahme (44) die Spannvorrichtung (45) in einem vorgegebenen Winkel zur linearen Laufrichtung anordenbar ist.

8. Handlaufantrieb (20) nach einem der Ansprüche 1 bis 7, wobei die Gegendruckeinrichtung (30) einen Führungsrahmen (37) aufweist, der starr mit einem Gehäuse (71) der Antriebseinrichtung (70) verbunden ist.

9. Handlaufantrieb (20) nach einem der Ansprüche 1 bis 8, wobei die Antriebseinrichtung (70) zumindest ein Antriebsrad (74), zumindest ein Spannrad (82), zumindest einen Antriebsriemen (77) und mehrere Stützrollen (78 bis 81) aufweist und der Antriebsriemen (77) von dem Antriebsrad (74) angetrieben ist.

10. Handlaufantrieb (20) nach Anspruch 9, wobei die Gegendruckrollen (31 bis 36) der Gegendruckeinrichtung (30) sowie das Antriebsrad (74), das Spannrad (82) und die Stützrollen (78 bis 81) der Antriebseinrichtung (70) einander jeweils paarweise zugeordnet sind.

11. Handlaufantrieb (20) nach Anspruch 10, wobei das mindestens eine flexible Zugmittel (48) mäanderförmig zwischen den Gegendruckrollen (31 bis 36) beziehungsweise deren Rollenachsen (43) und mehreren Umlenkeinrichtungen (50) angeordnet ist.

12. Handlaufantrieb (20) nach einem der Ansprüche 1 bis 11, wobei das mindestens eine flexible Zugmittel (48) ein Stahlseil, ein Glasfaserseil, ein Karbonfaserseil, ein Aramidfaserseil, ein Textilfaserseil mit geringer Dehnung, ein Riemen oder eine Kette ist.

13. Personentransporteinrichtung (1, 11), die als Fahrtreppe (1) oder Fahrsteig (11) ausgestaltet ist, mit zumindest einem bewegbaren Handlauf (3) und zumindest einem Handlaufantrieb (20) nach einem der Ansprüche 1 bis 12, der zum Antreiben des Handlaufes (3) dient.

14. Verfahren zur Modernisierung einer bestehenden Personentransporteinrichtung (1, 11), **dadurch gekennzeichnet, dass** mindestens ein bestehender Handlaufantrieb der Personentransporteinrichtung (1, 11) durch mindestens einen Handlaufantrieb (20) nach einem der Ansprüche 1 bis 12 ersetzt wird.

## Claims

1. A handrail drive (20) comprising at least one drive device (70) and at least one counterpressure device (30), which counterpressure device (30) contains at least two counterpressure rollers (31 to 36), wherein a handrail (3) of a person transporting device (1, 11) is able to be guided between the drive device (70) and the counterpressure device (30), and the at least two counterpressure rollers (31 to 36) are able to load the handrail (3) against the drive device (70) by means of a pressing force (F_{A}), wherein each of the counterpressure rollers (31 to 36) has a roller axle (43) and the handrail drive (20) contains at least one flexible pulling means (48) which is connected to the roller axle (43) by at least one partial looping, for transmitting the preloading force (Fs) of a loading device (45) of the handrail drive (20) to the roller axle (43), **characterised in that** the transmission ratio of the pressing force (F_{A}) of the counterpressure roller (31 to 36) acting on the handrail (3) to the preloading force (Fs) of the loading device (45) is able to be predetermined by a complementary angle of contact (α, β, γ) of the looping of the flexible pulling means (48) and the associated angles of contact (α, β, γ) of at least two counterpressure rollers differ from each other.

2. The handrail drive (20) according to claim 1, wherein the counterpressure device (30) comprises linear guides (42), the at least two counterpressure rollers (31 to 36) being guided by said linear guides (42) at an angle relative to the longitudinal extent and/or to the central longitudinal axis (M-M) of the handrail (3).

3. The handrail drive (20) according to claim 2, wherein the linear guides (42) are arranged at right angles to the longitudinal extent and/or to the central longitudinal axis (M-M) of the handrail (3).

4. The handrail drive (20) according to one of claims 1 to 3, wherein the roller axle (43) protrudes over the counterpressure roller (31 to 36) on both sides with its two ends and in the mounted state each of the two ends of the roller axle (43) is connected to at least one flexible pulling means (48).

5. The handrail drive (20) according to claim 4, wherein each of the two ends of the roller axle (43) is guided by means of an associated linear guide (42) of the counterpressure device (30).

6. The handrail drive (20) according to one of claims 1 to 5, wherein the counterpressure device (30) comprises at least one deflection device (50) for deflecting the at least one flexible pulling means (48).

7. The handrail drive (20) according to one of claims 1 to 6, wherein the handrail (3) is guided between the drive device (70) and the counterpressure device (30) in a travel zone (D) in the linear running direction and the counterpressure device (30) comprises at least one spring receiver (44), the loading device (45) being able to be arranged by means of said spring receiver (44) at a predetermined angle to the linear running direction.

8. The handrail drive (20) according to one of claims 1 to 7, wherein the counterpressure device (30) comprises a guide frame (37) which is rigidly connected to a housing (71) of the drive device (70).

9. The handrail drive (20) according to one of claims 1 to 8, wherein the drive device (70) comprises at least one drive wheel (74), at least one tensioning wheel (82), at least one drive belt (77) and a plurality of supporting rollers (78 to 81), and the drive belt (77) is driven by the drive wheel (74).

10. The handrail drive (20) according to claim 9, wherein the counterpressure rollers (31 to 36) of the counterpressure device (30) and the drive wheel (74), the tensioning wheel (82) and the supporting rollers (78 to 81) of the drive device (70) are in each case assigned in pairs to one another.

11. The handrail drive (20) according to claim 10, wherein the at least one flexible pulling means (48) is arranged in a meandering manner between the counterpressure rollers (31 to 36) and/or the roller axles (43) thereof and a plurality of deflection devices (50).

12. The handrail drive (20) according to one of claims 1 to 11, wherein the at least one flexible pulling means (48) is a steel cable, a glass fibre cable, a carbon fibre cable, an aramid fibre cable, a textile fibre cable with low elongation, a belt or a chain.

13. A person transporting device (1, 11) which is designed as an escalator (1) or moving walkway (11), comprising at least one movable handrail (3) and at least one handrail drive (20), according to one of claims 1 to 12, which serves for driving the handrail (3).

14. A method for modernising an existing person transporting device (1, 11), **characterised in that** at least one existing handrail drive of the person transporting device (1, 11) is replaced by at least one handrail drive (20) according to one of claims 1 to 12.

## Revendications

1. Entraînement de main courante (20) comprenant au moins un dispositif d'entraînement (70) et au moins un dispositif de contre-pression (30), lequel dispositif de contre-pression (30) comporte au moins deux galets de contre-pression (31 à 36), une main courante (3) d'un dispositif de transport de personnes (1, 11) pouvant être guidée entre le dispositif d'entraînement (70) et le dispositif de contre-pression (30) et la main courante (3) pouvant être soumise à une force de pression (F_{A}) contre le dispositif d'entraînement (70) par lesdits au moins deux galets de contre-pression (31 à 36), chacun des galets de contre-pression (31 à 36) présentant un axe de galet (43) et l'entraînement de main courante (20) comportant au moins un moyen de traction flexible (48) qui est relié à l'axe de galet (43) par au moins un enroulement partiel pour transmettre la force de précontrainte (Fs) d'un dispositif de tension (45) de l'entraînement de main courante (20) à l'axe de galet (43), **caractérisé en ce que** le rapport de transmission de la force de pression (F_{A}), agissant sur la main courante (3), du galet de contre-pression (31 à 36) par rapport à la force de précontrainte (Fs) du dispositif de tension (45) peut être prédéfini par un angle d'enroulement complémentaire (α, β, γ) de l'enroulement du moyen de traction flexible (48) et les angles d'enroulement (α, β, γ) associés d'au moins deux galets de contre-pression sont différents les uns des autres.

2. Entraînement de main courante (20) selon la revendication 1, dans lequel le dispositif de contre-pression (30) comprend des guides linéaires (42), au moyen desquels guides linéaires (42) lesdits au moins deux galets de contre-pression (31 à 36) sont guidés de manière angulaire par rapport à l'étendue longitudinale, respectivement par rapport à l'axe médian longitudinal (M-M), de la main courante (3).

3. Entraînement de main courante (20) selon la revendication 2, dans lequel les guides linéaires (42) sont disposés perpendiculairement à l'étendue longitudinale, respectivement à l'axe médian longitudinal (M-M), de la main courante (3).

4. Entraînement de main courante (20) selon l'une des revendications 1 à 3, dans lequel l'axe de galet (43) dépasse de manière bilatérale par ses deux extrémités au-delà du galet de contre-pression (31 à 36) et, à l'état monté, chacune des deux extrémités de l'axe de galet (43) est reliée à au moins un moyen de traction flexible (48).

5. Entraînement de main courante (20) selon la revendication 4, dans lequel chacune des deux extrémités de l'axe de galet (43) est guidée au moyen d'un guide linéaire (42) associé du dispositif de contre-pression (30).

6. Entraînement de main courante (20) selon l'une des revendications 1 à 5, dans lequel le dispositif de contre-pression (30) comprend au moins un dispositif de renvoi (50) servant au renvoi dudit au moins un moyen de traction flexible (48).

7. Entraînement de main courante (20) selon l'une des revendications 1 à 6, dans lequel la main courante (3) est guidée entre le dispositif d'entraînement (70) et le dispositif de contre-pression (30) dans une zone de passage (D) dans la direction de déplacement linéaire et le dispositif de contre-pression (30) comprend au moins un logement de ressort (44), au moyen duquel logement de ressort (44) le dispositif de tension (45) peut être disposé suivant un angle prédéfini par rapport à la direction de déplacement linéaire.

8. Entraînement de main courante (20) selon l'une des revendications 1 à 7, dans lequel le dispositif de contre-pression (30) comprend un cadre de guidage (37) qui est relié rigidement à un carter (71) du dispositif d'entraînement (70).

9. Entraînement de main courante (20) selon l'une des revendications 1 à 8, dans lequel le dispositif d'entraînement (70) comprend au moins une roue d'entraînement (74), au moins une roue de tension (82), au moins une courroie d'entraînement (77) et plusieurs galets d'appui (78 à 81) et la courroie d'entraînement (77) est entraînée par la roue d'entraînement (74).

10. Entraînement de main courante (20) selon la revendication 9, dans lequel les galets de contre-pression (31 à 36) du dispositif de contre-pression (30) ainsi que la roue d'entraînement (74), la roue de serrage (82) et les galets d'appui (78 à 81) du dispositif d'entraînement (70) sont associés respectivement par paires les uns aux autres.

11. Entraînement de main courante (20) selon la revendication 10, dans lequel ledit au moins un moyen de traction flexible (48) est disposé de manière sinueuse entre les galets de contre-pression (31 à 36), respectivement leurs axes de galet (43), et plusieurs dispositifs de renvoi (50).

12. Entraînement de main courante (20) selon l'une des revendications 1 à 11, dans lequel ledit au moins un moyen de traction flexible (48) est un câble en acier, un câble en fibres de verre, un câble en fibres de carbone, un câble en fibres d'aramide, un câble en fibres textiles de faible allongement, une courroie ou une chaîne.

13. Dispositif de transport de personnes (1, 11) qui est conçu en tant qu'escalier roulant (1) ou trottoir roulant (11), comprenant au moins une main courante (3) mobile et au moins un entraînement de main courante (20) selon l'une des revendications 1 à 12, lequel sert à l'entraînement de la main courante (3).

14. Procédé de modernisation d'un dispositif de transport de personnes (1, 11) existant, **caractérisé en ce qu'**au moins un entraînement de main courante existant du dispositif de transport de personnes (1, 11) est remplacé par au moins un entraînement de main courante (20) selon l'une des revendications 1 à 12.
